# EUROPEAN PATENT APPLICATION

(11) **EP 4 559 844 A1**
(43) Date of publication of application: **28.05.2025**
(21) Application number: 23843381.7
(22) Date of filing: 19.07.2023
(51) Int. Cl.: B65G 47/06, B65G 59/06

(54) **APPARATUS FOR SUPPLYING PRODUCT BOXES**

(30) Priority: 22.07.2022 KR 20220090885
(71) Applicant: Seegene, Inc., Seoul 05548 (KR)
(72) Inventor: LIM, Hyun-Jin, Seoul 06927 (KR); CHO, Deog-Pill, Seoul 08018 (KR); BAEK, Jong-Wook, Gunpo-si, Gyeonggi-do 15809 (KR); JEONG, Won-Seok, Seoul 08719 (KR); HAN, Yoo-Jun, Anyang-si, Gyeonggi-do 14044 (KR)
(74) Representative: Beck & Rössig European Patent Attorneys
(86) International application number: PCT/KR2023/010428
(87) International publication number: WO 2024/019535

(57) **Abstract**

An apparatus for suppling product boxes may comprise: a loading unit which loads product boxes; a discharge unit which is disposed below the loading unit and discharges the product boxes; a rotation guide structure which is disposed below the discharge unit, supports, in a first mode, a product box located at a first position of the discharge unit from among the product boxes, and guides, in a second mode, the product box such that the product box rotates while the product box located at the first position of the discharge unit falls; and a conveyor which is disposed below the rotation guide structure and on which the rotated product box is provided.

## Description

### BACKGROUND

### 1. FIELD

Embodiments relate generally to an apparatus for feeding a product box. More particularly, embodiments of the present inventive concept relate to an apparatus for feeding a product box including a rotation guide structure.

### 2. DESCRIPTION OF THE RELATED ART

In a production automation system, an apparatus for feeding a product box may stack the product boxes and feed the stacked product boxes to a conveyor.

For example, a worker may stack the product boxes in a stacking unit (or magazine) of the apparatus for feeding the product box, and the stacked product boxes may be fed to the conveyor in their stacked state. In this case, because a loading slot of the stacking unit for stacking the product boxes is located at a top of the apparatus for feeding the product box, it may be difficult for the worker to provide the product boxes to the loading slot of the stacking unit. In addition, the product box provided in the loading slot of the stacking unit may be stacked by dropping vertically. In this case, a product is damaged according to the type of products included in the product box.

Further, when the stacked product boxes are fed to the conveyor in their stacked state, the product box may fall freely by gravity from the stacking unit to the conveyor. In this case, a product is damaged according to the type of products included in the product box. In addition, the product box may not be positioned at a predetermined position of the conveyor, and there is a problem that errors occur in a subsequent process due to an irregular arrangement of the product boxes placed on the conveyor.

### SUMMARY

Embodiments provide an apparatus for feeding a product box.

According to embodiments of the present disclosure, an apparatus for feeding a product box includes a stacking unit where product boxes are stacked, a release unit where the product boxes are released, a rotation guide structure, and a conveyer where a rotated product box is provided. The release unit is disposed under the stacking unit. The rotation guide structure is disposed under the release unit. In a first mode, the rotation guide structure supports a product box placed in a first position of the release unit among the product boxes. In a second mode, the rotation guide structure guides the product box so that the product box is rotated while the product box placed in the first position of the release unit is dropped. The conveyer is disposed under the rotation guide structure.

In embodiments, the rotation guide structure may include a first supporting member and a second supporting member. The first supporting member may include a first supporting portion supporting a first part of the product box in the first mode and a tilting portion tilted at a predetermined angle so that the product box is slid in the second mode. The second supporting member may include a second supporting portion supporting a second part of the product box placed in the first position of the release unit in the first mode.

In embodiments, the first supporting member may further include a bending portion in contact with the product box while the product box placed in the first position is released from the release unit in the second mode and is dropped. The bending portion may be positioned between the first supporting portion and the tilting portion.

In embodiments, the first supporting member may include a first surface in contact with the product box placed in the first position, a second surface in contact with the product box while the product box placed in the first position is released from the release unit in the second mode and is dropped, a third surface extending from the first surface to the second surface, and a fourth surface slantly extending from the second surface. The first surface may be defined as the first supporting portion, and the second and third surfaces may be defined as the bending portion. The fourth surface may be defined as the tilting portion.

In embodiments, the second supporting member may include a fifth surface in contact with the product box placed in the first position and a sixth surface adjacent to the product box after the product box placed in the first position is released from the release unit and is provided to the conveyer. The fifth surface may be defined as the second supporting portion, and the sixth surface may be defined as the third supporting portion.

In embodiments, the first surface may be substantially parallel to the fifth surface, and the third surface may face to the sixth surface.

In embodiments, in the first mode of the rotation guide structure, the first supporting portion of the first supporting member may support a first part of a first surface of the product box placed in the first position. The second supporting portion of the second supporting member may support a second part of the first surface of the product box placed in the first position.

In embodiments, in the second mode of the rotation guide structure, the first and second supporting members may move in a horizontal direction so that a distance between the first and second supporting members is increased. The tilting portion of the first supporting member may guide the product box so that the product box is rotated while the product box is dropped after the product box placed in the first position is released from the release unit. The rotated product box may be provided to the conveyer.

In embodiments, the second supporting member may include a fifth surface in contact with the product box placed in the first position and a sixth surface adjacent to the product box after the product box placed in the first position is released from the release unit and is provided to the conveyer. The sixth surface of the second supporting member may guide the product box so that the product box is placed in a predetermined position of the conveyer while the product box is provided to the conveyer after the product box placed in the first position is released from the release unit.

In embodiments, the product boxes stacked in the stacking unit may be stacked in the vertical direction A length in a vertical direction of each of the product boxes stacked in the stacking unit may be less than a length in a horizontal direction of each of the product boxes in a side view of the apparatus.

In embodiments, the rotation guide structure may further include a third supporting member supporting a product box placed in a second position of the release unit among the product boxes. The product box placed in the second position may be stacked on the product box placed in the first position.

In embodiments, the third supporting member may support the product box placed in the second position during the second mode so that the product box placed in the second position does not move to the first position. When the first mode starts, the third supporting member may be spaced apart from the product box placed in the second position so that the product box placed in the second position moves to the first position.

In embodiments, the product box may be rotated due to a potential energy while the product box placed in the first position of the release unit is dropped by a gravity.

In embodiments, the stacking unit may include first through n-th stacking units, where n is an integer greater than 1, and the apparatus may further include a frame accommodating the first through n-th stacking units. A part of the frame may be connected to a first distal end of a k-th stacking unit among the first through n-th stacking units, where k is an integer between 1 and n, and the k-th stacking unit may have an open state and a close state on an axis with respect to a portion where the first distal end of the k-th stacking unit is connected to the frame.

In embodiments, the apparatus may further include a stopper in a bar shape disposed adjacent to the first distal end of the k-th stacking unit. The stopper may have a first state to be positioned inside the k-th stacking unit and a second state to be positioned outside the k-th stacking unit.

In embodiments, the release unit may include first through n-th release units corresponding to the first through n-th stacking units. When the k-th stacking unit is in the open state, the product boxes may be stacked to the k-th stacking unit in the first state of the stopper. When the k-th stacking unit is in the close state, a product box located adjacent to the stopper among the product boxes may move to the first position of a k-th release unit among the first through n-th release units in the second state of the stopper.

In embodiments, the apparatus may further include a first coupling unit and a second coupling unit. The first coupling unit may be disposed adjacent to a second distal end of the k-th and (k+1)-th stacking units, and may include a convex portion that is protruded in a direction. The second coupling unit may be disposed on the frame, and may include a concave portion that is dented in the direction so that the concave portion corresponds to the convex portion of the first coupling unit. The first and second coupling units may be coupled by a magnetic force in the close state.

In embodiments, the apparatus may further include a detecting module measuring a distance between the detecting module and the product boxes while the product boxes are moved by the conveyer after the product box placed in the first position of each of the first through n-th release units is provided to the conveyer.

In embodiments, the detecting module may measure a distance between the detecting module and a product box located adjacent to the detecting module among the product boxes provided to the conveyer.

In embodiments, the release unit may include first through n-th release units corresponding to the first through n-th stacking units, and the rotation guide structure may further include a third supporting member supporting a product box placed in a second position of each of the first through n-th release units among the product boxes. The product box placed in the second position is stacked on the product box placed in the first position. When the measured distance between the detecting module and the product boxes is less than a predetermined distance, the rotation guide structure may operate in the first mode. When the measured distance between the detecting module and the product boxes is greater than the predetermined distance, the rotation guide structure may operate in the second mode. The third supporting member may support the product box placed in the second position during the second mode so that the product box placed in the second position does not move to the first position. When the first mode starts, the third supporting member may be spaced apart from the product box placed in the second position so that the product box placed in the second position moves to the first position.

In embodiments, while the product box placed in the first position of the release unit is dropped, the rotation guide structure may guide the product box so that the product box is clockwise rotated by about 90 degrees in a side view of the apparatus.

According to embodiments of the present disclosure, an apparatus for feeding a product box includes a stacking unit where product boxes are stacked, a release unit where the product boxes are released, a rotation guide structure, and a conveyer where the rotated product box is provided. The release unit is disposed under the stacking unit. The rotation guide structure is disposed under the release unit. In a first mode, the rotation guide structure supports a product box placed in a first position of the release unit among the product boxes. In a second mode, the rotation guide structure guides the product box so that the product box is rotated while the product box placed in the first position of the release unit is dropped. The conveyer is disposed under the rotation guide structure. The rotation guide structure includes a first supporting member and a second supporting member. The first supporting member includes a first surface supporting a first part of the product box placed in the first position of the release unit, a second surface in contact with the first part of the product box while the product box placed in the first position is released from the release unit and is dropped, a third surface extending from the first surface to the second surface, and a fourth surface slantly extending from the second surface. The second supporting member includes a fifth surface in contact with the product box placed in the first position and a sixth surface adjacent to the product box after the product box placed in the first position is released from the release unit and is provided to the conveyer.

As the apparatus according to embodiments of the present disclosure includes a relatively wide loading slot, a worker may relatively easily stack the product box in the stacking unit. In addition, by stacking a relatively large number of the product boxes in stacking unit, the number of times where the worker stacks the product box in the stacking unit may be relatively reduced. Accordingly, a difficulty of a work may be relatively lowered, and an amount of the work may also be relatively reduced.

In addition, as the apparatus includes the rotation guide structure, apparatus may guide the product box to rotate and provide a rotated product box to a predetermined position of the conveyor. Accordingly, since the product boxes are regularly arranged, errors may not occur in a subsequent process.

Further, as the first supporting member includes the bending portion, a shock generated when a dropped product box is in contact with the first supporting member may be relatively alleviated. Accordingly, the product box may not be damaged. In addition, the bending portion may help the product box to clockwise rotate while the product box released from the release unit is dropped. Accordingly, after the first part of the product box is in contact with the bending portion, by preventing the product box from counterclockwise rotating, a rotated product box may be provided to a predetermined position of the conveyor.

However, the effects of the present disclosure are not limited to the effects described above, and may be expanded in various ways without departing from the spirit and scope of the present disclosure.

### BRIEF DESCRIPTION OF THE DRAWINGS

Embodiments may be understood in more detail from the following description taken in conjunction with the accompanying drawings.
FIG. 1 is a front view illustrating an apparatus for feeding a product box according to embodiments of a present disclosure.
FIG. 2 is a perspective view illustrating open and close states of the stacking unit included in the apparatus for feeding the product box of FIG. 1.
FIG. 3 is a top view for describing first and second coupling units included in the apparatus for feeding the product box of FIG. 1.
FIG. 4 is a side view for describing a first mode of a rotation guide structure included in the apparatus for feeding the product box of FIG. 1.
FIG. 5 is a side view for describing a second mode of a rotation guide structure included in the apparatus for feeding the product box of FIG. 1.
FIG. 6 is a side view for describing first, second, third, fourth, fifth, and sixth surfaces of first and second supporting members included in the apparatus for feeding the product box of FIG. 1.
FIGS. 7, 8, 9, and 10 are side views for describing an operation of the apparatus for feeding the product box.
FIG. 11 is a side view illustrating an example of the first and second supporting members of FIG. 6.

### DETAILED DESCRIPTION OF THE EMBODIMENTS

Hereinafter, an apparatus for feeding a product box according to embodiments will be described in detail with reference to the accompanying drawings. In the accompanying drawings, same or similar reference numerals refer to the same or similar elements.

In present disclosure, specific structural and functional descriptions are merely exemplified for the purpose of explaining embodiments of the present disclosure, and the embodiments of the present disclosure may be implemented in various forms and are not construed as being limited to the embodiments described in the present disclosure, but should be understood to include all modifications, equivalents, and substitutes included in the spirit and technical scope of the present disclosure. When a component is described as being "connected" or "in contact with" another component, it should be understood that it may be directly connected or in contact with the other component, but another component may exist in between. In addition, when a component is described as being "directly connected" or "in direct contact with" another component, it may be understood that there is no another component in between. Other expressions describing the relationship between components, such as "between" and "directly between" or "adjacent to" and "directly adjacent to", may be interpreted in the same way.

The terminology used in the present disclosure is for the purpose of describing embodiments only and is not intended to be limiting of the present disclosure. The singular expression includes the plural expression unless the context clearly indicates otherwise. In the present disclosure, it should be understood that the terms "comprise," "include," or "have" are intended to specify the presence of a feature, number, step, operation, component, part, or combination thereof, but do not exclude in advance the possibility of the presence or addition of one or more other features, numbers, steps, operations, components, parts, or combinations thereof. Unless otherwise defined, all terms used herein, including technical or scientific terms, have the same meaning as commonly understood by one of ordinary skill in the art to which this disclosure belongs.

Terms defined in commonly used dictionaries should be interpreted as having a meaning consistent with their meaning in the context of the relevant art, and will not be interpreted in an idealized or overly formal sense unless expressly defined in the present disclosure.

The terms first, second, and third may be used to describe various components, but these components are not limited by the terms. The terms are used for the purpose of distinguishing one component from another. For example, without departing from the scope of the present disclosure, the first component may be referred to as the second or third component, and similarly, the second or third component may be referred to interchangeably.

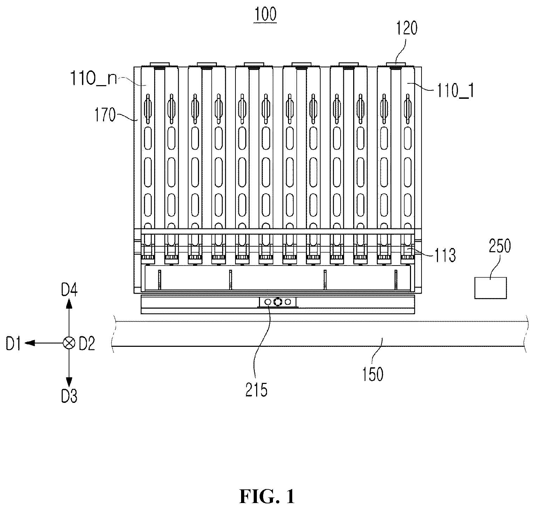

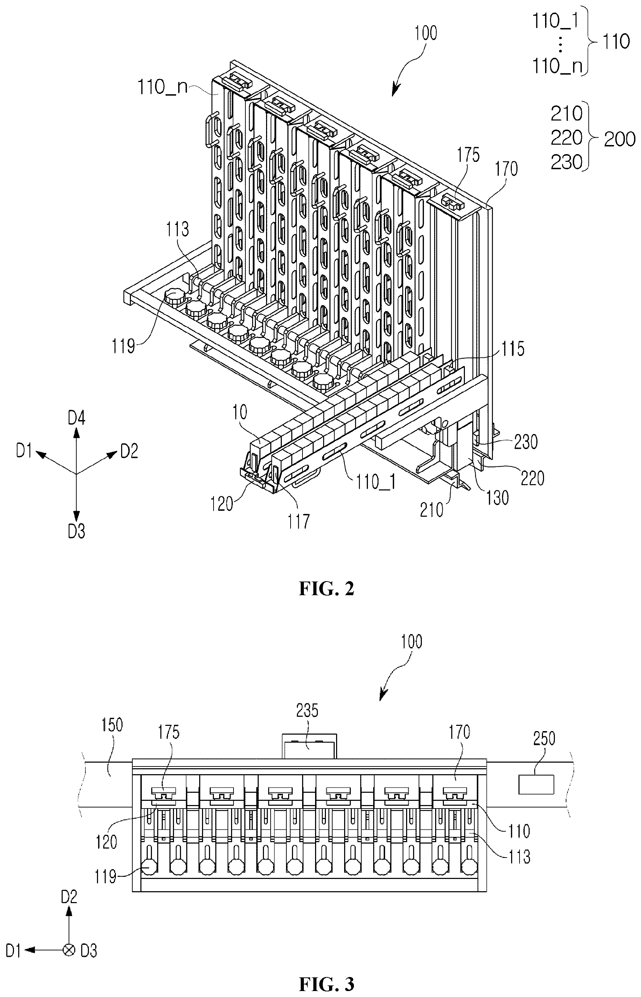

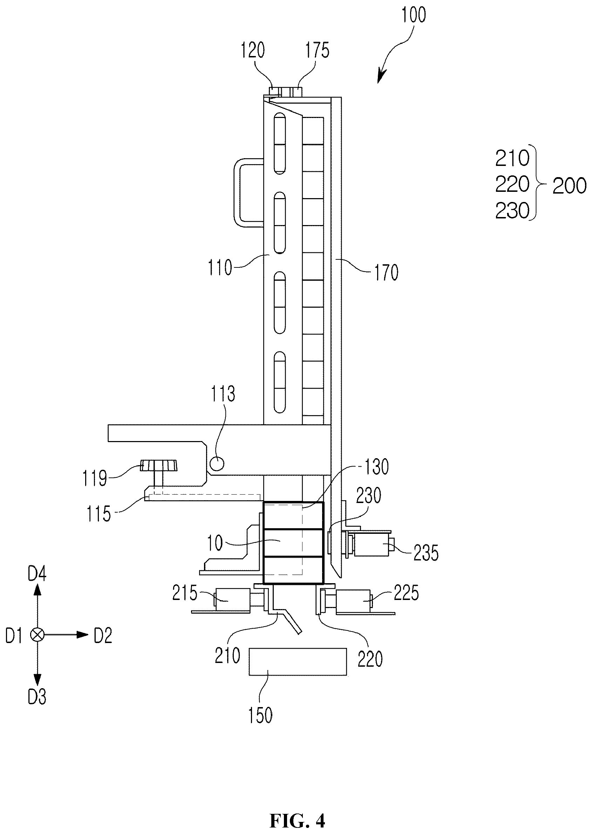

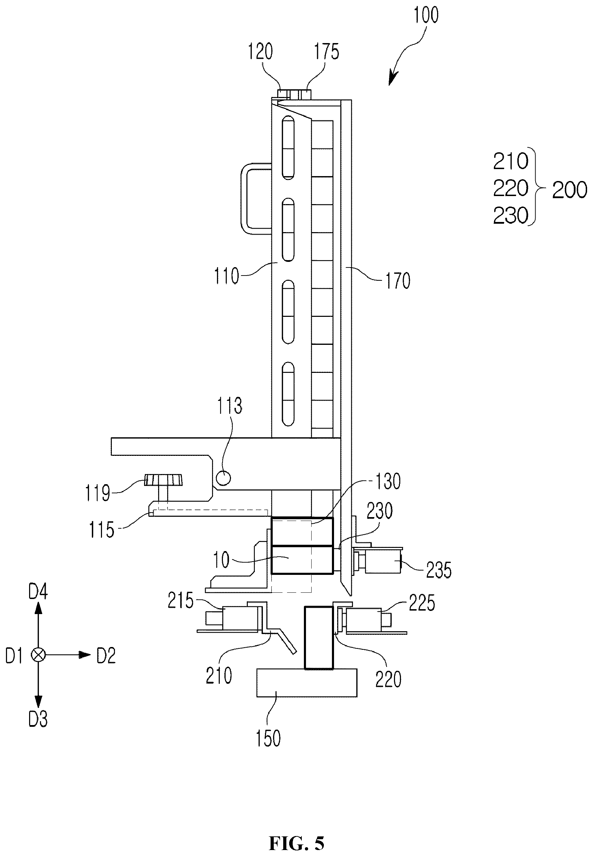

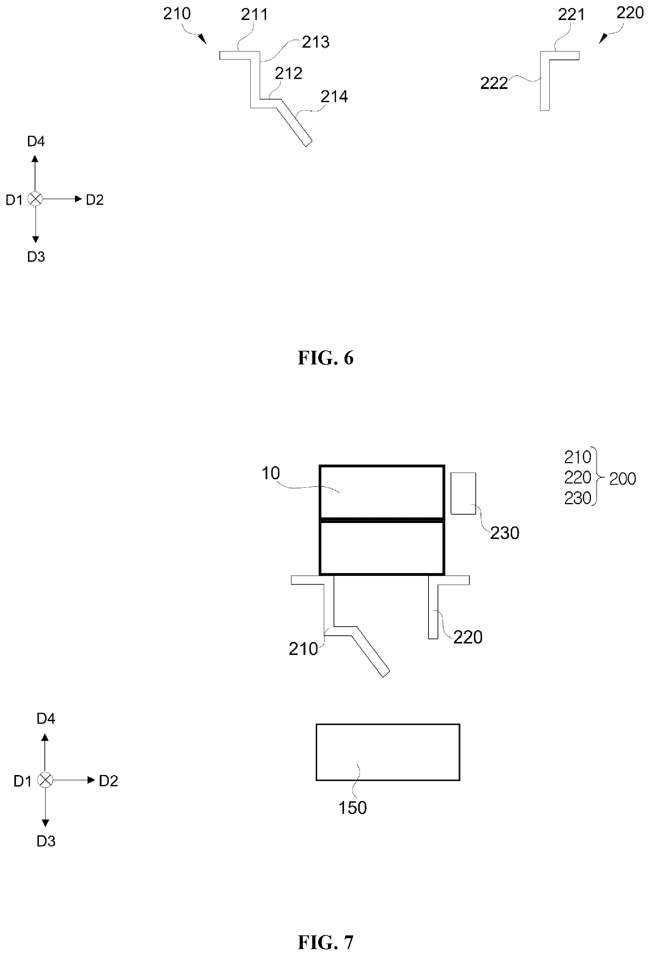

FIG. 1 is a front view illustrating an apparatus for feeding a product box according to embodiments of a present disclosure, and FIG. 2 is a perspective view illustrating open and close states of the stacking unit included in the apparatus for feeding the product box of FIG. 1. FIG. 3 is a top view for describing first and second coupling units included in the apparatus for feeding the product box of FIG. 1, and FIG. 4 is a side view for describing a first mode of a rotation guide structure included in the apparatus for feeding the product box of FIG. 1. FIG. 5 is a side view for describing a second mode of a rotation guide structure included in the apparatus for feeding the product box of FIG. 1, and FIG. 6 is a side view for describing first, second, third, fourth, fifth, and sixth surfaces of first and second supporting members included in the apparatus for feeding the product box of FIG. 1.

Referring to FIGS. 1, 2, 3, 4, 5, and 6, an apparatus for feeding a product box (refer to as 'apparatus' hereinafter) 100 may include a stacking unit 110, an axis 113, a release unit 130, a conveyor 150, a frame 170, a stopper 115, a lever 119, a fixing unit 117, a first coupling unit 120, a second coupling unit 175, a rotation guide structure 200, a detecting module 250, etc. Here, the rotation guide structure 200 may include a first supporting member 210, a second supporting member 220, and a third supporting member 230, and the rotation guide structure 200 may operate in a first mode and a second mode. The first supporting member 210 and the second supporting member 220 of the rotation guide structure 200 according to embodiments of the present disclosure support a product box 10 placed in a first position of the release unit 130 among product boxes 10 in the first mode, and guide the product box 10 so that the product box 10 is rotated while the product box 10 placed in the first position of the release unit 130 is dropped in the second mode. Here, the rotation of the product box 10 means that the product box 10 is rotated at a predetermined angle (e.g., about 90 degrees, about 180 degrees, about 270 degrees, etc.) while the product box 10 is dropped from the stacking unit 110 so that a shape where the product box 10 is stacked in the stacking unit 110 is different from a shape where the product box 10 is provided on the conveyor 150 according to a request of a worker. In addition, the third supporting member 230 of the rotation guide structure 200 may support the product box 10 placed in a second position so that the product box 10 placed in the second position of the release unit 130 is not moved to the first position in the second mode.

The frame 170 may accommodate the stacking unit 110. For example, the stacking units 110 may include first through n-th stacking units 110_1, ..., 110_n, where n is an integer greater than 1, the first through n-th stacking units 110_n may be accommodated in the frame 170. That is, the frame 170 may surround at least a portion of the first through n-th stacking units 110_1, ..., 110_n and at least a portion of the product boxes 10 stacked in the first through n-th stacking units 110_1, ..., 110_n.

The frame 170 may include a metal, an alloy, metal nitride, etc. For example, the frame 170 may include the metal such as gold (Au), silver (Ag), aluminum (Al), iron (Fe), zinc (Zn), lead (Nb), tungsten (W), copper (Cu), platinum (Pt), nickel (Ni), titanium (Ti), palladium (Pd), magnesium (Mg), calcium (Ca), lithium (Li), chromium (Cr), tantalum (Ta), molybdenum (Mo), scandium (Sc), neodymium (Nd), iridium (Ir), etc, the alloy such as an aluminum-containing alloy, a silver-containing alloy, a copper-containing alloy, a molybdenum-containing alloy, etc, and the metal nitride such as aluminum nitride (AlNₓ), tungsten nitride (WNₓ), titanium nitride (TiNₓ), chromium nitride (CrNₓ), tantalum nitride (TaNₓ), etc. In embodiments,the frame 170 may include Al. Alternatively, the frame 170 may include a body and a coating layer. Here, the body may include a first metal material, and the coating layer that includes a second metal material and laminates the body.

In embodiments, a part of the frame 170 may be connected to a first distal end of a k-th stacking unit 110_k among the first through n-th stacking units 110_1, ..., 110_n, where k is an integer between 1 and n. In other words, the k-th stacking unit 110_k may be connected to the frame 170 through the axis 113. That is, the n axises 113 may be used so that the first through n-th stacking units 110_1, ..., 110_n and the frame 170 are connected. Accordingly, the k-th stacking unit 110_k may be rotated on the axis 113.

The product box 10 may be stacked in the stacking unit 110. As illustrated in FIG. 2, the stacking unit 110 may surround at least a portion of the product box 10. Here, a part where the stacking unit 110 does not surround the product box 10 is defined as a loading slot of the stacking unit 110, and a surface facing the loading slot is defined as a lower surface of the stacking unit 110. In other words, the product box 10 may be stacked toward the lower surface of the stacking unit 110 through the loading slot. In addition, the stacking unit 110 may be connected to the frame 170 through the axis 113, and the stacking unit 110 may have an open state and a close state.

For example, the open state of the stacking unit 110 may be a stage where the stacking unit 110 is rotated by about 90 degrees from the frame 170 on the axis 113, in a front view of the apparatus 100. In other words, the lower surface of the stacking unit 110 may be in substantially parallel to a surface of the earth (i.e., the ground) in the open state. The product box 10 may be stacked in the stacking unit 110 in the open state of the stacking unit 110, each of the product boxes 10 may be arranged in a horizontal direction (e.g., in a direction substantially parallel to the ground) in the stacking unit 110 while standing upright. Here, when the product box 10 stands upright, a length in the horizontal direction (e.g., left and right directions) of the product box 10 may be less than a length in a vertical direction (e.g., up and down directions) of the product box 10 in a side view of the apparatus 100. In other words, when a product included (or stored) in the product box 10 is a container sealed with a cap (or lid), the lid may be located adjacent to the lower surface of the product box 10, and a lower surface of the container may be located adjacent to the loading slot of the stacking unit 110. For example, at least one container sealed with the lid may be accommodated in the product box 10, and a powder of a solid state or a reagent of a liquid state may be contained in the container.

In embodiments, the stacking unit 110 may have a relatively wide loading slot, and a height from the ground to the loading slot may be relatively low in the open state of the stacking unit 110. Accordingly, a worker may relatively easily stack the product box 10 in the stacking unit 110, the product included in the product box 10 may not be damaged because the product box 10 do not drop vertically during a process of stacking the product box 10. In addition, as the product box 10 is stacked in the stacking unit 110 while standing upright, a relatively large number of the product boxes 10 may be stacked in the stacking unit 110.

Otherwise, the close state of the stacking unit 110 is a state where the stacking unit 110 is accommodated in the frame 170. In other words, the product box 10 stacked in the stacking unit 110 may be provided to the release unit 130 in the close state of the stacking unit 110. For example, the lower surface of the stacking unit 110 in the open state may be substantially vertical to the ground in the close state. In the close state of the stacking unit 110, the product boxes 10 may be stacked in the stacking unit 110 along the vertical direction (e.g., a direction that is substantially vertical to the ground). In this case, a length in the vertical direction of each of the product boxed 10 stacked in the stacking unit 110 may be less than a length in the horizontal direction of each of the product boxes 10 in a side view of the apparatus 100.

The stacking unit 110 may include a metal, an alloy, metal nitride, etc. In embodiments, the stacking unit 110 may include Al.

The stopper 115 may be located adj acent to the first distal end of the stacking unit 110. Here, the first distal end of the stopper 115 may be located adj acent to the axis 113. The stopper 115 may have a shape of a bar, and the stopper 115 may have a first state and a second state. For example, the stopper 115 may be positioned inside the stacking unit 110 in the first state, and the stopper 115 may not be positioned inside the stacking unit 110 in the second state. In addition, the lever 119 may be connected to the stopper 115, and the first and second states of the stopper 115 may be implemented through the lever 119. For example, when the lever 119 illustrated in FIG. 2 is a forward state where the lever 119 is located adjacent to the axis 113, the stopper 115 may be the first state. When the lever 119 illustrated in FIGS. 4 and 5 is a backward state where the lever 119 is away from the axis 113, the stopper 115 may be the second state. The stopper 115 may include a metal, an alloy, metal nitride, etc.

In embodiments, the stopper 115 may be the first state in the open state of a k-th stacking unit 110_k among the first through n-th stacking units 110_1, ..., 110_n. That is, the n stoppers 115 may be disposed in the first through n-th stacking units 110_1, ..., 110_n, respectively. When the product boxes 10 are stacked in the k-th stacking unit 110_k in the open state of the k-th stacking unit 110_k, it may prevent the product boxes 10 from escaping out of the k-th stacking unit 110_k because the stopper 115 is positioned inside the k-th stacking unit 110_k. In addition, after the product boxes 10 are stacked in the k-th stacking unit 110_k4, the k-th stacking unit 110_k may be changed to the close state while maintaining the first state of the stopper 115. The stopper 115 may be changed to the second state in the close state of the k-th stacking unit 110_k. When the stopper 115 is changed to the second state in the close state of the k-th stacking unit 110_k, the stacked product boxes 10 may be entirely dropped in a direction from the stacking unit 110 to the release unit 130 because the stopper 115 is not positioned inside the k-th stacking unit 110_k. In this case, the product boxes 10, which are located adjacent to the stopper 115, among the product boxes 10 may be provided to the release unit 130 (e.g., a k-th release unit 130_k among first through n-th release units 130 corresponding to the first through n-th stacking units 110_1, ..., 110_n). Here, the product box 10, which is in contact with the stopper 115, among the product boxes 10 may be moved to a first position of the k-th release unit 130_k, and the first position may be located adjacent to (or in contact with) the first and second supporting members 210 and 220 of the rotation guide structure 200. That is, the product box 10 moved to the first position of the k-th release unit 130_k may be supported by the first and second supporting members 210 and 220. In addition, the product box 10 ,which is in contact with the product box product box 10 placed in the first position, among the product boxes 10 disposed on the product box 10 placed in the first position is defined as being placed in a second position of the k-th release unit 130_k. That is, the second position of the k-th release unit 130_k may be located on the first position of the k-th release unit 130_k. Here, the product box 10 placed in the second position of the k-th release unit 130_k may be selectively supported by the third supporting member 230.

The fixing unit 117 may be opposite to the stopper 115, may be disposed adjacent to a second distal end of the stacking unit 110. For example, the product boxes 10 may be stacked between the stopper 115 and the fixing unit 117 in the open state of the stacking unit 110. After the product boxes 10 are stacked in the stacking unit 110, the fixing unit 117 together with the stopper 115 may fix the stacked product boxes 10 so that the product boxes 10 stacked in the stacking unit 110 does not escape while the stacking unit 110 is changed from the open state to the close state.

The first coupling unit 120 may be disposed adjacent to the second distal end of the stacking unit 110, and the first coupling unit 120 may include a convex portion protruded in a direction. Here, the first distal end of the stacking unit 110 may be opposite to the second distal end of the stacking unit 110. The first coupling unit 120 may be coupled to the second coupling unit 175 in the close state of the stacking unit 110. The first coupling unit 120 may include a magnetic material.

The second coupling unit 175 may be disposed on the frame 170, and may include a concave portion dented (or recessed) in the first direction. Here, the concave portion may correspond to the convex portion of the first coupling unit 120 in the close state of the stacking unit 110. In embodiments, the convex portion of the first coupling unit 120 may be coupled to the concave portion of the second coupling unit 175 by a magnetic force in the close state of the stacking unit 110. For example, metal balls having magnetic properties may be disposed in both lateral portions of the concave portion of the second coupling unit 175, and the convex portion of the first coupling unit 120 may be positioned between the metal balls. Alternatively, the magnetic force may be controlled by adjusting a distance between the metal balls. The second coupling unit 175 may include a magnetic material.

In embodiments, the first coupling unit 120 may be disposed adjacent to the second distal ends of k-th and (k+1)-th stacking units 110_k and 110_k+1 among the first through n-th stacking units 110_1, ..., 110_n, and may include a convex portion protruded in the direction. That is, the n/2 first coupling units 120 may be disposed on the first through n-th stacking units 110_1, ..., 110_n, respectively. In addition, the n/2 second coupling units 175 may be disposed on the frame 170 so that the n/2 second coupling units 175 correspond to the n/2 first coupling units 120, and each of the n/2 second coupling units 175 may the concave portion recessed in the direction. Here, the concave portion may correspond to the convex portion of the first coupling unit 120. After the product boxes 10 are stacked in the k-th and (k+1)-th stacking units 110_k and 110_k+1, the k-th and (k+1)-th stacking units 110_k and 110_k+1 may be changed to the close state while maintaining the first state of the stopper 115. To maintain the close state, the first coupling unit 120 disposed on the k-th and (k+1)-th stacking units 110_k and 110_k+1 may be coupled to the second coupling unit 175 disposed on the 170.

The release unit 130 may be disposed under the stacking unit 110 in the close state, and the release unit 130 may release the product box 10. In other words, the release unit 130 may be disposed between the stacking unit 110 and the first and second supporting members 210 and 220. As described above, the first position and the second position may be defined in the release unit 130. The product box 10 placed in the first position may correspond to the product box 10 first released from the release unit 130, and the product box 10 placed in the second position may be correspond to the product box 10 second released from the release unit 130.

In embodiments, when a k-th stacking unit 110_k among the first through n-th stacking units 110_1, ..., 110_n is the close state, a k-th release unit 130_k among first through n-th release units 130 may be positioned to vertically overlap the k-th stacking unit 110_k.

The release unit 130 may include a metal, an alloy, metal nitride, etc. In embodiments,the release unit 130 may be include Al.

Referring again to FIGS. 4, 5, and 6, the first supporting member 210 and the second supporting member 220 may be disposed between the release unit 130 and the conveyor 150. Each of the first and second supporting members 210 and 220 may be movable in the horizontal direction. For example, the apparatus 100 may further include a first cylinder device 215, and the first cylinder device 215 and the first supporting member 210 may be connected. The first cylinder device 215 may move the first supporting member 210 in the horizontal direction, in a side view of the apparatus 100. In addition, the apparatus 100 may further include a second cylinder device 225, and the second cylinder device 225 and the second supporting member 220 may be connected. The second cylinder device 225 may move the second supporting member 220 in the horizontal direction, in the side view of the apparatus 100.

In embodiments, the first supporting member 210 may include (i) a first supporting portion supporting a first part of the product box 10 placed in the first position of the release unit 130 in the first mode, (ii) a bending portion in contact with a released product box 10 while the product box 10 placed in the first position is dropped by being released from the release unit 130 in the second mode, and (iii) a tilting portion tilted at a predetermined angle so that the released product box 10 is slid while the product box 10 placed in the first position is dropped by being released from the release unit 130 in the second mode. Here, the bending portion may be located between the first supporting portion and the tilting portion. For example, the first supporting member 210 may include (i) a first surface 211 in contact with the product box 10 placed in the first position, (ii) a second surface 212 adjacent to the first part of the released product box 10 while the product box 10 placed in the first position is dropped by being released from the release unit 130 in the second mode, (iii) a third surface 213 extending from the first surface 211 to the second surface 212, and (iv) a fourth surface 214 slantly extending from the second surface 212. The first surface 211 may be substantially vertical to the third surface 213, and the third surface 213 may be substantially vertical to the second surface 212. The first surface 211 may be in substantially parallel to the second surface 212, and the fourth surface 214 may have a predetermined angle with respect to the second surface 212. That is, it may be positioned in the order of the first surface 211, the third surface 213, the second surface 212, and the fourth surface 214. Further, the first surface 211 may be defined as the first supporting portion, and the second surface 212 and the third surface 213 may be defined as the bending portion. The fourth surface 214 may be defined as the tilting portion.

In other words, the first supporting member 210 may support the product box 10, which is placed in the first position of each of the first through n-th release units 130, among the product boxes 10 in the first mode, and the first supporting member 210 may rotate a released product box 10 while the product box 10 placed in the first position is dropped by being released from the release unit 130 in the second mode. For example, the product box 10 placed in the first position of the release unit 130 may be clockwise rotated by about 90 degrees in a side view of the apparatus 100.

The first supporting member 210 may include a metal, an alloy, metal nitride, etc. In embodiments, the first supporting member 210 may include steel use stainless (SUS).

In embodiments, the second supporting member 220 may include (i) a second supporting portion supporting a second part of the product box 10 placed in the first position of the release unit 130 in the first mode and (ii) a third supporting portion guiding a released product box 10 while the product box 10 placed in the first position is provided to the conveyor 150 by being released from the release unit 130 in the second mode. For example, the second supporting member 220 may include (i) a fifth surface 221 in contact with the product box 10 placed in the first position and (ii) a sixth surface 222 adjacent to a provided product box 10 after the product box 10 placed in the first position is provided to the conveyor 150 by being released from the release unit 130. The fifth surface 221 may be substantially vertical to the sixth surface 222, and the first surface 211, the second surface 212, and the fifth surface 221 may be in parallel to each other. The third surface 213 may be in parallel to (or face) the sixth surface 222. In addition, the fifth surface 221 is defined as the second supporting portion, and the sixth surface 222 is defined as the third supporting portion.

In other words, the second supporting member 220 may support the product box 10, which is placed in the first position of each of the first through n-th release units 130, among the product boxes 10 in the first mode, and the second supporting member 220 may guide a released product box 10 so that the released product box 10 is placed at a predetermined position of the conveyor 150 while the released product box 10 is provided to the conveyor 150 after the product box 10 placed in the first position is released from the release unit 130 in the second mode.

The second supporting member 220 may include a metal, an alloy, metal nitride, etc. In embodiments, the second supporting member 220 may include SUS.

In embodiments, as the first supporting member 210 includes the bending portion, a shock generated when the released product box 10 is in contact with the first supporting member 210 may be alleviated while the product box 10 released from the release unit 130 is dropped. For example, when a released product box 10 is in direct contact with the tilting portion by dropping the product box 10 released from the release unit 130, the bending portion may relatively reduce a distance where the released product box 10 is dropped because containers may be damaged according to the type of the containers included in the product box 10. In addition, the bending portion (i.e., the second surface 212) may help the product box 10 to clockwise rotate while the product box 10 released from the release unit 130 is dropped. For example, when the first part of the product box 10 is heavier than the second part of the product box 10 or the first supporting member 210 moves in the horizontal direction before the second supporting member 220, the first part of the product box 10 may be first dropped while the product box 10 is dropped. In other words, the product box 10 may be dropped in a state that is counterclockwise rotated. However, when the first part of the product box 10 is in contact with the bending portion, the product box 10 may no longer be counterclockwise rotated, and the product box 10 may be clockwise rotated after the first part of the product box 10 is contact with the bending portion.

In embodiments, an upper limit of a length extended in a second direction D2 of the second surface 212 may be less than about 50% of a length extended in the second direction D2 of the product box 10 placed in the first position, and preferably, the length of the second surface 212 may be less than about 30% of the length of the product box 10. For example, a maximum length of the second surface 212 that prevents the product box 10 from stopping between the first and second supporting members 210 and 220 during a process of dropping the product box 10 may be determined as the upper limit.

In addition, a lower limit of the length extended in the second direction D2 of the second surface 212 may be more than about 5% of the length extended in the second direction D2 of the product box 10 placed in the fist position, and preferably the length of the second surface 212 may be more than about 10% of the length extended in the second direction D2 of the product box 10. For example, a minimum length of the second surface 212 that enables the product box 10 to clockwise rotate by being in contact with the second surface 212 during a process of dropping the product box 10 may be determined as the lower limit.

Additionally, the length of the second surface 212 may be determined by further considering a weight of the product box 10, a shape (or material) of the product box 10, a distance where the product box 10 is dropped, a speed where the first and second supporting members 210 and 220 separate from each other, etc.

The third supporting member 230 may be spaced apart from the first and second supporting members 210 and 220 on the first and second supporting members 210 and 220, and the third supporting member 230 may be positioned adjacent to a side (e.g., the second position) of the release unit 130. The third supporting member 230 may be moved in the horizontal direction. For example, the apparatus 100 may further include a third cylinder device 235, and the third cylinder device 235 may be connected to the third supporting member 230. The third cylinder device 235 may move the third supporting member 230 in the horizontal direction, in a side view of the apparatus 100.

In embodiments, the third supporting member 230 may support the product box 10 placed in the second position of the release unit 130 in the second mode. Here, the product box 10 placed in the second position may be positioned directly on the product box 10 placed in the first position.

In other words, the third supporting member 230 may support the product box 10 placed in the second position of each of the first through n-th release units 130 among the product boxes 10 in the second mode, and the third supporting member 230 may be spaced apart from the product box 10 placed in the second position at the start of the first mode so that the product box 10 placed in the second position of each of the first through n-th release units 130 is moved to the first position.

The third supporting member 230 may include urethane, rubber, etc. In embodiments, the third supporting member 230 may include a flexible material so that the product box 10 placed in the second position is not damaged when being in contact with the product box 10 placed in the second position.

Referring again to FIGS. 1, 2, 3, 4, and 5, the conveyor 150 may be disposed under the first and second supporting members 210 and 220 (or the release unit 130). The first and second supporting members 210 and 220 may guide a released product box 10 so that the released product box 10 is rotated while the product box 10 released from the release unit 130 is dropped, and a rotated product box 10 may be provided to the conveyor 150. When the first stacking unit 110_1 among the first through n-th stacking units 110_1, ..., 110_n is positioned closest to the detecting module 250, the conveyor 150 may move the product box 10 provided in a direction from the first stacking unit 110_1 to the n-th stacking unit 110_n.

The detecting module 250 may be disposed on the conveyor 150, and may be positioned adjacent to the first stacking unit 110_1. After the product boxes 10 placed in the first position of the first through n-th release units 130 is provided to the conveyor 150, the detecting module 250 may measure a distance to the provided product boxes 10 while the product boxes 10 are moved by the conveyor 150. In embodiments, the detecting module 250 may measure a distance to the product box 10, which is adjacent to the detecting module 250, among the provided product boxes 10 through a laser. For example, when a measured distance to the product boxes 10 is less than a predetermined distance, the rotation guide structure 200 may operate in the first mode, and when the measured distance to the product boxes 10 is more than the predetermined distance, the rotation guide structure 200 may operate in the second mode. As illustrated in FIG. 4, the first and second supporting members 210 and 220 may support the product box 10 placed in the first position of the release unit 130 in the first mode of the rotation guide structure 200. For example, the first supporting portion (or the first surface 211) of the first supporting member 210 may support a first part of the product box 10 placed in the first position (e.g., a left side of a lower surface of the product box 10 placed in the first position of the release unit 130), and the second supporting portion (or first surface 211) of the second supporting member 220 may support a second part of the product box 10 placed in the first position (e.g., a right side of the lower surface of the product box 10 placed in the first position of the release unit 130).

While the first mode is in progress, the third supporting member 230 may be spaced apart from the product box 10 placed in the second position of the release unit 130. For example, the third supporting member 230 is moved to a right side through the third cylinder device 235 so as to be spaced apart from the product box 10 placed in the second position of the release unit 130.

As illustrated in FIG. 5, a distance between the first supporting member 210 and the second supporting member 220 may be increased so that the product box 10 placed in the first position of the release unit 130 is dropped in the second mode of the rotation guide structure 200. That is, the first and second supporting members 210 and 220 may be moved in the horizontal direction. For example, the first supporting member 210 may be moved to a left side away from the second supporting member 220 through the first cylinder device 215, and the second supporting member 220 may be moved to a right side away from the first supporting member 210 through the second cylinder device 225. In embodiments, the first and second supporting members 210 and 220 may be simultaneously moved in the horizontal direction. Alternatively, the first supporting member 210 may be moved first, and the second supporting member 220 may be moved later.

After the product box 10 placed in the first position of the release unit 130 is released from the release unit 130, the fourth surface 214 (or the tilting portion) of the first supporting member 210 may guide a released product box 10 so that the released product box 10 is rotated while the released product box 10 is dropped (or falls freely), and the released product box 10 may be provided to the conveyor 150. Here, the product box 10 placed in the first position of the release unit 130 may be rotated due to a potential energy while falling freely by gravity.

While the second mode is in progress, the third supporting member 230 may support the product box 10 placed in the second position of the release unit 130 so that the product box 10 placed in the second position of the release unit 130 is not moved to the first position of the release unit 130. For example, the third supporting member 230 is moved to a left side through the third cylinder device 235 so that the product box 10 placed in the second position of the release unit 130 is supported.

However, although it has been described that the first supporting member 210 is positioned in the left side, the second supporting member 220 is positioned in the right side, and the third supporting member 230 is positioned in the right side in FIGS. 4 and 5, a configuration of the present disclosure is not limited thereto. For example, the first supporting member 210 may be positioned in the right side, the second supporting member 220 may be positioned in the left side, and the third supporting member 230 may be positioned in the left side.

In addition, although the stacking unit 110 is described as being opened to the left side in FIGS. 4 and 5, the configuration of the present disclosure is not limited thereto. For example, the stacking unit 110 may be opened to the right side.

Further, although one first coupling unit 120 is described as being disposed on adjacent two stacking units 110 to each other, the configuration of the present disclosure is not limited thereto. For example, one first coupling unit 120 may be disposed on one stacking unit 110.

FIGS. 7, 8, 9, and 10 are side views for describing an operation of the apparatus for feeding the product box.

Referring to FIGS. 1 and 2, the stacking unit 110 of the close state may be changed to the open state. The product boxes 10 may be stacked in a third direction D3 through the loading slot of the stacking unit 110 in the open state of the stacking unit 110. In this case, the stopper 115 may be in a first state so as to be positioned inside the stacking unit 110. That is, the lever 119 may be in the forward state where the lever 119 is moved in a fourth direction D4 in the open state. For example, the stacking unit 110 may include the first through n-th stacking units 110_1, ..., 110_n, and the open state of the first and second stacking units 110_1 and 110_2 and the close state of the third through n-th stacking units 110_3, ..., 110_n are illustrated in FIG. 2.

Referring to FIG. 3, after the product boxes 10 are stacked, the stacking unit 110 may be changed to the close state while maintaining the first state of the stopper 115. After the stacking unit 110 is changed to the close state, the first coupling unit 120 may be coupled to the second coupling unit 175. After the first coupling unit 120 is coupled to the second coupling unit 175, the stopper 115 may be changed to the second state so as not to be positioned inside the stacking unit 110. In this case, the stacked product boxes 10 may be entirely dropped in a direction from the stacking unit 110 to release unit 130 because the stopper 115 is not positioned inside the stacking unit 110. That is, in the close state, the lever 119 may be the backward state where the lever 119 is moved in a direction opposite to a second direction D2.

Referring to FIGS. 4 and 7, after the stopper 115 is changed to the second state, the product box 10, which is in contact with the stopper 115, among the product boxes 10 stacked in the stacking unit 110 may be moved to the first position of the release unit 130 (or in the third direction D3), and the first supporting portion of the first supporting member 210 and the second supporting portion of the second supporting member 220 may support the product box 10 placed in the first position. When the first and second supporting portions of the first and second supporting members 210 and 220 support the product box 10 placed in the first position, the third supporting member 230 may be spaced apart from the product box 10 placed in the second position of the release unit 130. A current position state of each of the first supporting member 210, the second supporting member 220, and the third supporting member 230 illustrated in FIGS. 4 and 7 may be defined as the first mode of the rotation guide structure 200.

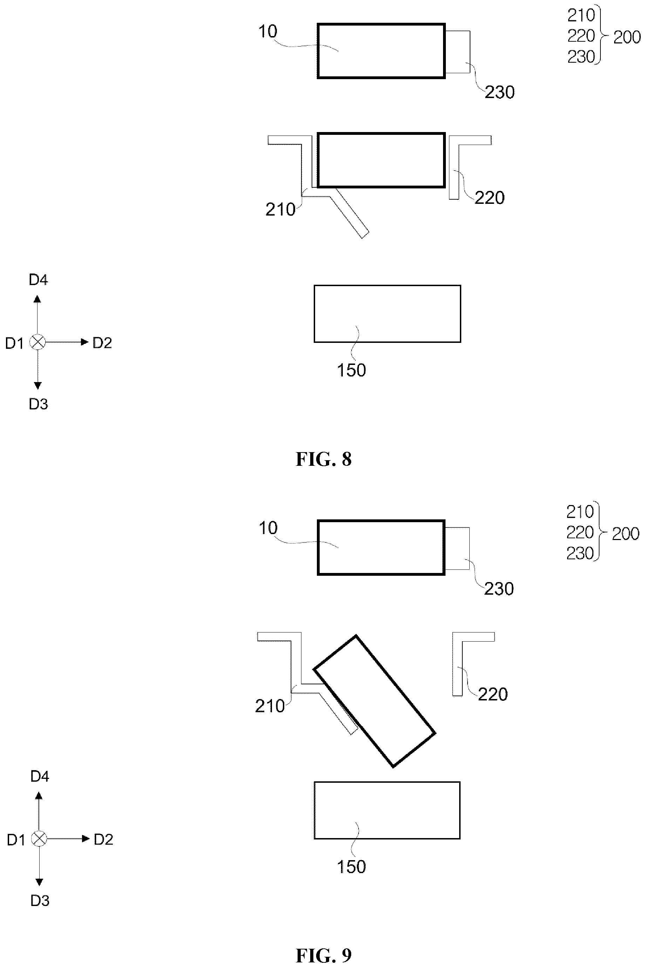

Referring to FIG. 8, after the first mode is finished, at the start of the second mode of the rotation guide structure 200, a distance between the first supporting member 210 and the second supporting member 220 may be increased so that the product box 10 placed in the first position of the release unit 130 falls freely in the third direction D3. In this case, the third supporting member 230 may support the product box 10 placed in the second position of the release unit 130 so that the product box 10 placed in the second position of the release unit 130 does not fall freely. In other words, the first supporting member 210 may be moved in a direction opposite to the second direction D2, and the second supporting member 220 may be moved in the second direction D2.

While the product box 10 placed in the first position is released from the release unit 130 in the third direction D3 and falls freely, the product box 10 may be in contact with the bending portion. In this case, the third supporting portion (e.g., the sixth surface 222) may be adjacent to a surface having a relatively small length of the product box 10.

Referring to FIG. 9, the distance between the first supporting member 210 and the second supporting member 220 may be further increased. While the product box 10 in contact with the bending portion of the first supporting member 210 falls freely, the tilting portion of the first supporting member 210 may guide the product box 10 so that the product box 10 is slid.

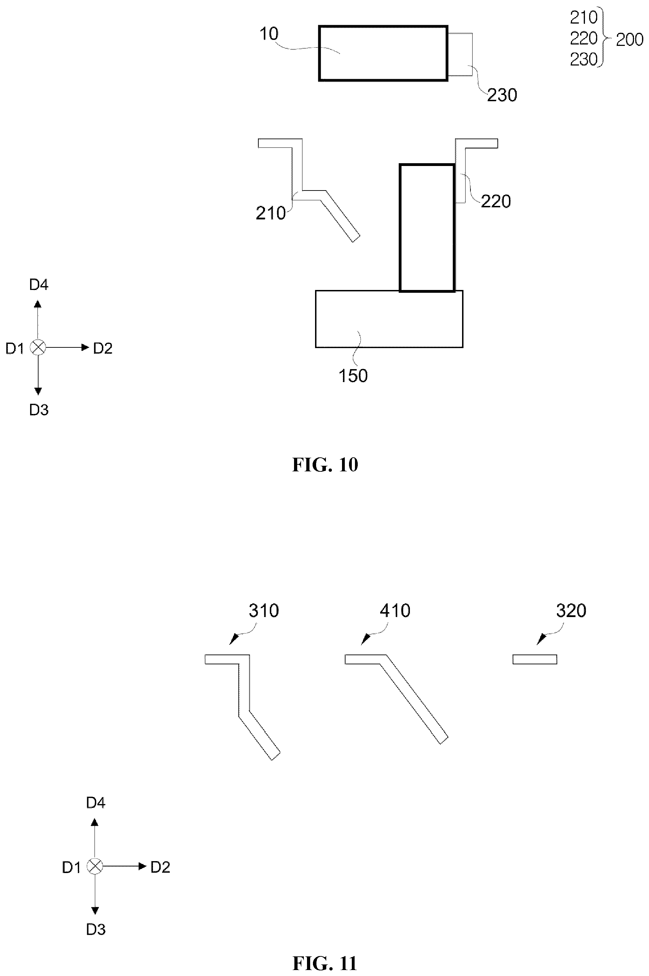

Referring to FIGS. 5 and 10, the product box 10 slid by the tilting portion of the first supporting member 210 may be provided to the conveyor 150. The third supporting portion of the third supporting member 230 may guide a provided product box 10 so that the provided product box 10 is placed at a predetermined position of the conveyor 150. In this case, the third supporting portion (e.g., the sixth surface 222) of the second supporting member 220 may be adjacent to (in contact with) a surface having a relatively long length of the product box 10.

A process illustrated in FIGS. 5, 8, 9, and 10 may be defined as the second mode of the rotation guide structure 200.

Referring to FIGS. 1 and 10, the product box 10 provided to the conveyor 150 may be moved in a first direction D1. The detecting module 250 may measure a distance to the provided product boxes while the product boxes 10 are moved by the conveyor 150.
when a measured distance to the product box 10 is more than a predetermined distance (e.g., when the product box 10 is not overlapped with the rotation guide structure 200), the rotation guide structure 200 may finish the second mode.

After the second mode is finished, the first supporting member 210 and the second supporting member 220 may be moved to their original position, and the third supporting member 230 may be spaced apart from the product box 10 placed in the second position of the release unit 130. As the third supporting member 230 is spaced apart from the product box 10 placed in the second position of the release unit 130, the product box 10 placed in the second position of the release unit 130 may be moved to the first position of the release unit 130, and the first mode may be performed again.

As the apparatus 100 according to embodiments of the present disclosure includes a relatively wide loading slot, a worker may relatively easily stack the product box 10 in the stacking unit 110. In addition, by stacking a relatively large number of the product boxes 10 in stacking unit 110, the number of times where the worker stacks the product box 10 in the stacking unit 110 may be relatively reduced. Accordingly, a difficulty of a work may be relatively lowered, and an amount of the work may also be relatively reduced.

In addition, as the apparatus 100 includes the rotation guide structure 200, apparatus 100 may guide the product box 10 to rotate and provide a rotated product box 10 to a predetermined position of the conveyor 150. Accordingly, since the product boxes 10 are regularly arranged, errors may not occur in a subsequent process.

Further, as the first supporting member 210 includes the bending portion, a shock generated when a dropped product box 10 is in contact with the first supporting member 210 may be relatively alleviated. Accordingly, the product box 10 may not be damaged. In addition, the bending portion may help the product box 10 to clockwise rotate while the product box 10 released from the release unit 130 is dropped. Accordingly, after the first part of the product box 10 is in contact with the bending portion, by preventing the product box 10 from counterclockwise rotating, a rotated product box 10 may be provided to a predetermined position of the conveyor 150.

FIG. 11 is a side view illustrating an example of the first and second supporting members of FIG. 6.

Referring to FIG. 11, a first supporting member 310 may include a first surface, a second surface, and a third surface. The first surface of the first supporting member 310 may be in contact with the product box 10 placed in the first position of the release unit 130, and the second surface of the first supporting member 310 may extend from the first surface to the third surface of the first supporting member 310. The third surface of the first supporting member 310 may be slanted (or inclined) from the second surface of the first supporting member 310.

A first supporting member 410 may include a first surface and a second surface. The first surface of the first supporting member 410 may be in contact with the product box 10 placed in the first position of the release unit 130, and the second surface of the first supporting member 410 may be slanted from the first surface of the first supporting member 410.

The second supporting member 320 may include a first surface, and the first surface of the second supporting member 320 may be in contact with the product box 10 placed in the first position of the release unit 130.

Although the present disclosure has been described with reference to embodiments thereof, it will be understood by those skilled in the art that various modifications and changes may be made therein without departing from the spirit and scope of the present disclosure as set forth in the claims below.

The present invention can be applied to various automated equipment that can be equipped with a product box supply device that guides the product box to rotate. For example, it can be applied to automated facilities that supply product boxes containing various items.

### <Explanation of symbols>

10: Product box 100: Product box supply device
110: Stacking unit 113: axis
115: Stopper 117: fixing part
119: Lever 120: first coupling portion
130: Release unit 150: conveyor
170: Frame 175 second joint
200: Rotation guide structures 210, 310, 410: first supporting member
211: First surface 212: Second surface
213: Third surface 214: fourth surface
215: First cylinder device 220, 320: second supporting150 member
221: fifth surface 222: sixth surface
225: Second cylinder device 230: third supporting member
235: Third cylinder device 250: detecting module

## Claims

1. An apparatus for feeding a product box, the apparatus comprising:
a stacking unit where product boxes are stacked;
a release unit disposed under the stacking unit, the release unit where the product boxes are released;
a rotation guide structure disposed under the release unit, in a first mode the rotation guide structure supporting a product box placed in a first position of the release unit among the product boxes, in a second mode the rotation guide structure guiding the product box so that the product box is rotated while the product box placed in the first position of the release unit is dropped; and
a conveyer disposed under the rotation guide structure, the conveyer where the rotated product box is provided.

2. The apparatus of claim 1, wherein the rotation guide structure includes:
a first supporting member including a first supporting portion supporting a first part of the product box in the first mode and a tilting portion tilted at a predetermined angle so that the product box is slid in the second mode; and
a second supporting member including a second supporting portion supporting a second part of the product box placed in the first position of the release unit in the first mode.

3. The apparatus of claim 2, wherein the first supporting member further includes a bending portion in contact with the product box while the product box placed in the first position is released from the release unit in the second mode and is dropped, and
wherein the bending portion is positioned between the first supporting portion and the tilting portion.

4. The apparatus of claim 3, wherein the first supporting member includes:
a first surface in contact with the product box placed in the first position;
a second surface in contact with the product box while the product box placed in the first position is released from the release unit in the second mode and is dropped;
a third surface extending from the first surface to the second surface; and
a fourth surface slantly extending from the second surface,
wherein the first surface is defined as the first supporting portion, and the second and third surfaces are defined as the bending portion, and
wherein the fourth surface is defined as the tilting portion.

5. The apparatus of claim 4, wherein the second supporting member includes:
a fifth surface in contact with the product box placed in the first position; and
a sixth surface adjacent to the product box after the product box placed in the first position is released from the release unit and is provided to the conveyer, and
wherein the fifth surface is defined as the second supporting portion, and the sixth surface is defined as the third supporting portion.

6. The apparatus of claim 5, wherein the first surface is substantially parallel to the fifth surface, and the third surface faces to the sixth surface.

7. The apparatus of claim 2, wherein in the first mode of the rotation guide structure, the first supporting portion of the first supporting member supports a first part of a first surface of the product box placed in the first position; and
the second supporting portion of the second supporting member supports a second part of the first surface of the product box placed in the first position.

8. The apparatus of claim 2, wherein:
in the second mode of the rotation guide structure, the first and second supporting members move in a horizontal direction so that a distance between the first and second supporting members is increased;
the tilting portion of the first supporting member guides the product box so that the product box is rotated while the product box is dropped after the product box placed in the first position is released from the release unit; and
the rotated product box is provided to the conveyer.

9. The apparatus of claim 8, wherein the second supporting member includes:
a fifth surface in contact with the product box placed in the first position; and
a sixth surface adjacent to the product box after the product box placed in the first position is released from the release unit and is provided to the conveyer, and
wherein the sixth surface of the second supporting member guides the product box so that the product box is placed in a predetermined position of the conveyer while the product box is provided to the conveyer after the product box placed in the first position is released from the release unit.

10. The apparatus of claim 1, wherein the product boxes stacked in the stacking unit are stacked in the vertical direction, and
wherein a length in a vertical direction of each of the product boxes stacked in the stacking unit is less than a length in a horizontal direction of each of the product boxes in a side view of the apparatus.

11. The apparatus of claim 1, wherein the rotation guide structure further includes a third supporting member supporting a product box placed in a second position of the release unit among the product boxes, and
wherein the product box placed in the second position is stacked on the product box placed in the first position.

12. The apparatus of claim 11, wherein the third supporting member supports the product box placed in the second position during the second mode so that the product box placed in the second position does not move to the first position, and
wherein when the first mode starts, the third supporting member is spaced apart from the product box placed in the second position so that the product box placed in the second position moves to the first position.

13. The apparatus of claim 1, wherein the product box is rotated due to a potential energy while the product box placed in the first position of the release unit is dropped by a gravity.

14. The apparatus of claim 1, wherein the stacking unit includes first through n-th stacking units, where n is an integer greater than 1,
wherein the apparatus further comprises a frame accommodating the first through n-th stacking units, and
wherein a part of the frame is connected to a first distal end of a k-th stacking unit among the first through n-th stacking units, where k is an integer between 1 and n, and the k-th stacking unit has an open state and a close state on an axis with respect to a portion where the first distal end of the k-th stacking unit is connected to the frame.

15. The apparatus of claim 14, further comprising:
a stopper in a bar shape disposed adjacent to the first distal end of the k-th stacking unit,
wherein the stopper has a first state to be positioned inside the k-th stacking unit and a second state to be positioned outside the k-th stacking unit.

16. The apparatus of claim 15, wherein the release unit includes first through n-th release units corresponding to the first through n-th stacking units,
wherein when the k-th stacking unit is in the open state, the product boxes are stacked to the k-th stacking unit in the first state of the stopper, and
wherein when the k-th stacking unit is in the close state, a product box located adjacent to the stopper among the product boxes moves to the first position of a k-th release unit among the first through n-th release units in the second state of the stopper.

17. The apparatus of claim 14, further comprising:
a first coupling unit disposed adjacent to a second distal end of the k-th and (k+1)-th stacking units, the first coupling unit including a convex portion that is protruded in a direction; and
a second coupling unit disposed on the frame, the second coupling unit including a concave portion that is dented in the direction so that the concave portion corresponds to the convex portion of the first coupling unit,
wherein the first and second coupling units are coupled by a magnetic force in the close state.

18. The apparatus of claim 14, further comprising:
a detecting module measuring a distance between the detecting module and the product boxes while the product boxes are moved by the conveyer after the product box placed in the first position of each of the first through n-th release units is provided to the conveyer.

19. The apparatus of claim 18, wherein the detecting module measures a distance between the detecting module and a product box located adjacent to the detecting module among the product boxes provided to the conveyer.

20. The apparatus of claim 18, wherein the release unit includes first through n-th release units corresponding to the first through n-th stacking units,
wherein the rotation guide structure further includes a third supporting member supporting a product box placed in a second position of each of the first through n-th release units among the product boxes,
wherein the product box placed in the second position is stacked on the product box placed in the first position,
wherein when the measured distance between the detecting module and the product boxes is less than a predetermined distance, the rotation guide structure operates in the first mode,
wherein when the measured distance between the detecting module and the product boxes is greater than the predetermined distance, the rotation guide structure operates in the second mode,
wherein the third supporting member supports the product box placed in the second position during the second mode so that the product box placed in the second position does not move to the first position, and
wherein when the first mode starts, the third supporting member is spaced apart from the product box placed in the second position so that the product box placed in the second position moves to the first position.

21. The apparatus of claim 1, wherein while the product box placed in the first position of the release unit is dropped, the rotation guide structure guides the product box so that the product box is clockwise rotated by about 90 degrees in a side view of the apparatus.

22. An apparatus for feeding a product box, the apparatus comprising:
a stacking unit where product boxes are stacked;
a release unit disposed under the stacking unit, the release unit where the product boxes are released;
a rotation guide structure disposed under the release unit, in a first mode the rotation guide structure supporting a product box placed in a first position of the release unit among the product boxes, in a second mode the rotation guide structure guiding the product box so that the product box is rotated while the product box placed in the first position of the release unit is dropped; and
a conveyer disposed under the rotation guide structure, the conveyer where the rotated product box is provided,
wherein the rotation guide structure includes a first supporting member and a second supporting member,
wherein the first supporting member includes:
a first surface supporting a first part of the product box placed in the first position of the release unit;
a second surface in contact with the first part of the product box while the product box placed in the first position is released from the release unit and is dropped;
a third surface extending from the first surface to the second surface; and
a fourth surface slantly extending from the second surface,
wherein the second supporting member includes:
a fifth surface in contact with the product box placed in the first position; and
a sixth surface adjacent to the product box after the product box placed in the first position is released from the release unit and is provided to the conveyer.
